# EUROPEAN PATENT APPLICATION

(11) **EP 4 804 049 A1**
(43) Date of publication of application: **09.09.2026**
(21) Application number: 24899307.3
(22) Date of filing: 06.08.2024
(51) Int. Cl.: G06F 16/27

(54) **DATABASE CLUSTER, DATA PROCESSING METHOD, DATA PROCESSING SYSTEM AND RELATED DEVICE**

(30) Priority: 08.12.2023 CN 202311691625
(71) Applicant: Huawei Technologies Co., Ltd., Shenzhen, Guangdong 518129 (CN)
(72) Inventor: GUO, Pingjing, Shenzhen, Guangdong 518129 (CN); LIANG, Yuansheng, Shenzhen, Guangdong 518129 (CN); SHANG, Jingliang, Shenzhen, Guangdong 518129 (CN); REN, Ren, Shenzhen, Guangdong 518129 (CN); ZHANG, Rui, Shenzhen, Guangdong 518129 (CN)
(74) Representative: Pfenning, Meinig & Partner mbB
(86) International application number: PCT/CN2024/109959
(87) International publication number: WO 2025/118658

(57) **Abstract**

A database cluster, a data processing method, a data processing system, and a related device are provided, relating to the field of database technologies. The database cluster includes a first service instance, a second service instance, and a storage engine instance. The storage engine instance is connected to the first service instance, the second service instance, and a storage apparatus. Metadata in the storage apparatus is shared by the first service instance and the second service instance. The first service instance is configured to send an operation command to the storage engine instance based on a database statement. The storage engine instance is configured to update, based on the operation command, first data and second metadata that are persistently stored in the storage apparatus. In this way, a plurality of service instances can share the same copy of metadata in the storage apparatus by using the storage engine instance, without the need to separately and persistently store a copy of metadata in local storage areas. If the metadata in the storage apparatus is updated, there is no need to synchronize the metadata. This improves performance of the database cluster.

## Description

This application claims priority to Chinese Patent Application No. 202311691625.2, filed with the China National Intellectual Property Administration on December 8, 2023 and entitled "DATABASE CLUSTER, DATA PROCESSING METHOD, DATA PROCESSING SYSTEM, AND RELATED DEVICE", which is incorporated herein by reference in its entirety.

### TECHNICAL FIELD

This application relates to the field of database technologies, and in particular, to a database cluster, a data processing method, a data processing system, and a related device.

### BACKGROUND

With the development of information technology, database systems, such as MySQL, are widely used in fields such as finance, communication, healthcare, logistics, and e-commerce, and are used to perform operations such as adding, deleting, modifying, and querying service data in each field.

Currently, requirements for concurrent reading and writing and availability of the database systems gradually increase. Therefore, in an actual application scenario, a plurality of database systems are usually integrated to form a database cluster. Each database system persistently stores a copy of metadata (metadata) locally. In this way, each of the plurality of database systems may access, by using the metadata stored in the database system, data persistently stored in the same storage area (for example, a storage area on a cloud), to improve the concurrent read/write capability and availability of the database cluster.

However, when a database system modifies the data in the storage area, the database system not only needs to update the metadata stored in the database system, but also needs to synchronize the updated metadata to other database systems, to ensure consistency of the metadata locally stored in the plurality of database systems. This causes high resource consumption of the database cluster, and affects performance of the database cluster.

### SUMMARY

This application provides a database cluster, to improve performance of the database cluster. In addition, this application further provides a data processing method, a data processing system, a device cluster, a computer-readable storage medium, and a computer program product.

According to a first aspect, this application provides a database cluster. The database cluster includes a plurality of service instances and at least one storage engine instance. For example, the service instance in the database cluster may be, for example, a service instance based on a MySQL database, and the storage engine instance may be, for example, a storage engine instance based on a MySQL database. The at least one storage engine instance is connected to the plurality of service instances and a storage apparatus, and the storage apparatus is configured to persistently store first data and persistently store first metadata corresponding to the first data. The plurality of service instances include a first service instance and a second service instance, a first storage engine instance among the at least one storage engine instance is connected to the first service instance and the second service instance, and the first metadata is shared by the first service instance and the second service instance. In other words, both the first service instance and the second service instance can access the first metadata in the storage apparatus. The first service instance is configured to: obtain a first database statement, and send a first operation command to the first storage engine instance based on the first database statement, where the first database statement may be, for example, a MySQL statement, and the first database statement indicates to update the first data. The first storage engine instance is configured to: update the first data in the storage apparatus based on the first operation command sent by the first service instance, to obtain second data, and update the first metadata to second metadata corresponding to the second data.

Because the first metadata is stored in the storage apparatus, and the storage engine instance can access the first metadata in the storage apparatus, the first service instance and the second service instance that are connected to the first storage engine instance can share the same copy of metadata in the storage apparatus by using the first storage engine instance. In this way, after the first service instance updates, by using the first storage engine instance, the first metadata corresponding to the first data in the storage apparatus to the second metadata corresponding to the second data, a metadata synchronization process does not need to be performed, that is, the second metadata may not need to be synchronized to a local storage area (used for persistent storage) of each service instance, to avoid resource consumption caused by metadata synchronization in the database cluster, so that the database cluster can use more resources to process services. This improves performance of the database cluster. In addition, the first service instance and the second service instance can share the same copy of metadata in the storage apparatus by using the first storage engine instance, so that the first service instance and the second service instance do not need to separately and persistently store the copy of metadata in the local storage area, to avoid storage resource consumption caused by persistently storing a plurality of copies of metadata in the database cluster. In this way, the database cluster can use more storage resources to process services, to further improve performance of the database cluster.

In a possible implementation, the at least one storage engine instance in the database cluster further includes a second storage engine instance, the plurality of service instances further include a third service instance, and the second storage engine instance is connected to the third service instance and the storage apparatus. The third service instance is configured to: obtain a second database statement, and send a second operation command to the second storage engine instance based on the second database statement, where the second database statement is used to update the second data. The second storage engine instance is configured to further update the second data based on the second operation command to obtain third data, and update the second metadata to third metadata corresponding to the third data. In this way, each of the plurality of service instances can update the data and the metadata in the storage apparatus by using a storage engine instance connected to the service instance, and updated metadata does not need to be synchronized between the plurality of service instances, to avoid resource consumption caused by metadata synchronization in the database cluster. This improves performance of the database cluster.

In a possible implementation, the storage apparatus includes a plurality of sub-storage apparatuses. For example, the storage apparatus includes a first sub-storage apparatus and a second sub-storage apparatus. The first sub-storage apparatus is configured to store the first data and the first metadata, and the second sub-storage apparatus and the first sub-storage apparatus are configured to store different data and different metadata. For example, data of different shards and metadata corresponding to the data of the shards may be stored. The at least one storage engine instance in the database cluster further includes a second storage engine instance. The second storage engine instance is connected to the first service instance, the second service instance, and the second sub-storage apparatus. The first storage engine instance is specifically connected to the first sub-storage apparatus. In this case, the first storage engine instance is used to access the first sub-storage apparatus, and the second storage engine instance is used to access the second sub-storage apparatus. In this way, the storage apparatus may store data and metadata by using a distributed storage structure, so that the service instance can update data and metadata in different sub-storage apparatuses by using different storage engine instances, and metadata does not need to be synchronized in the database cluster. This improves performance of the database cluster.

In a possible implementation, the storage apparatus includes a metadata storage apparatus and a plurality of data storage apparatuses. For example, the storage apparatus includes a first data storage apparatus and a second data storage apparatus. The first data storage apparatus is configured to store the first data, and the first data storage apparatus and the second data storage apparatus are configured to store different data. For example, data of different shards may be stored. The metadata storage apparatus is configured to store metadata corresponding to all data, including metadata corresponding to data stored in the first data storage apparatus and metadata corresponding to data stored in the second data storage apparatus. The at least one storage engine instance in the database cluster further includes a second storage engine instance. The second storage engine instance is connected to the first service instance, the second service instance, and the second data storage apparatus. The first storage engine instance is specifically connected to the first data storage apparatus, and both the first storage engine instance and the second storage engine instance are connected to the metadata storage apparatus. In this case, the first storage engine instance is configured to access the first data storage apparatus and the metadata storage apparatus, and the second storage engine instance is configured to access the second data storage apparatus and the metadata storage apparatus. In this way, the storage apparatus may store data by using a distributed storage structure, and metadata may be stored in a centralized storage manner, so that the service instance can update data and metadata in different data storage apparatuses by using different storage engine instances, and metadata does not need to be synchronized in the database cluster. This improves performance of the database cluster.

In a possible implementation, the first service instance is further configured to: before sending the first operation command to the first storage engine instance, set a lock on the first metadata, to limit, by using the set lock, reading and writing of the first data corresponding to the first metadata, and after the first metadata is updated to the second metadata, release the lock set on the first metadata. The first storage engine instance is further configured to: indicate the second service instance connected to the first storage engine instance to set a lock on the first metadata, and after updating the first metadata to the second metadata, indicate the second service instance to release the lock set on the first metadata. In this way, when the first service instance updates data and metadata in the storage apparatus by using the first storage engine instance, the first service instance and the second service instance may set the lock on the first metadata, to prohibit the first service instance and the second service instance from updating (and reading) the data described by the metadata, so that it is ensured that the plurality of service instances do not concurrently modify same data and same metadata.

In a possible implementation, the at least one storage engine instance in the database cluster further includes the second storage engine instance, the plurality of service instances further include the third service instance, and the second storage engine instance is connected to the third service instance and the storage apparatus; and the first storage engine instance is further configured to: before updating the first metadata to the second metadata, indicate, via the second storage engine instance, the third service instance to set a lock on the first metadata; and after updating the first metadata to the second metadata, indicate, via the second storage engine instance, the third service instance to release the lock set on the first metadata. In this way, when there are the plurality of storage engine instances in the database cluster, the first service instance may notify, by using the plurality of storage engine instances, each remaining service instance to set a lock on the first metadata, to ensure that the plurality of service instances do not concurrently modify same data and same metadata.

In a possible implementation, before the first metadata is updated to the second metadata, the first metadata is cached in the first service instance, the second service instance, and the third service instance, to improve efficiency of parsing a database statement by using the cached first metadata. The first service instance is further configured to: after the first metadata is updated to the second metadata, invalidate the first metadata cached in the first service instance; and the first storage engine instance is further configured to: indicate the second service instance to invalidate the first metadata cached in the second service instance, and indicate, via the second storage engine instance, the third service instance to invalidate the first metadata cached in the third service instance. In this way, the first service instance notifies, by using the plurality of storage engine instances, a remaining service instance to invalidate the cached first metadata, to prevent each service instance from subsequently performing an incorrect data processing process based on the expired first metadata.

In a possible implementation, the second service instance is configured to: after invalidating the cached first metadata cache the second metadata in the storage apparatus. In this way, the second service instance re-caches metadata in the storage apparatus, so that a subsequently obtained database statement can be parsed by using latest metadata. This improves database statement parsing efficiency and accuracy. In addition, the plurality of service instances can all re-cache metadata in the storage apparatus, so that the metadata cached in the plurality of service instances can be consistent.

In a possible implementation, the first service instance is further configured to: after the first metadata is updated to the second metadata, send a transaction to the first storage engine instance, where the transaction includes the database statement obtained by the first service instance; and the first storage engine instance is further configured to commit the transaction. In this way, the database cluster can complete modification of data and metadata in the storage apparatus within a single transaction. This can ensure atomic modification of data and metadata.

In a possible implementation, the first storage engine instance fails before committing the transaction, and the second storage engine instance is configured to: roll back an update operation on the first data and the first metadata, and indicate the third service instance to release the lock set on the first metadata. In this way, fault recovery for the storage engine instance can be implemented through taking over by the second storage engine instance. In other words, the update operation on the first data and the second metadata may be rolled back, so that the database cluster is restored to a state before the first storage engine instance is faulty.

In a possible implementation, the first storage engine instance fails after committing the transaction, and the second storage engine instance is configured to: indicate the third service instance to release the lock set on the first metadata and to invalidate the first metadata cached in the third service instance. In this way, an uncompleted operation of the first storage engine instance can continue to be performed through taking over by the second storage engine instance, and fault processing for the first storage engine instance is completed in the database cluster, to ensure normal running of the database cluster.

According to a second aspect, this application provides a data processing method, and the method is applied to a database cluster. The database cluster includes a plurality of service instances and at least one storage engine instance, the at least one storage engine instance is connected to the plurality of service instances and a storage apparatus, the storage apparatus is configured to persistently store first data and first metadata corresponding to the first data, a first storage engine instance among the at least one storage engine instance is connected to a first service instance and a second service instance among the plurality of service instances, and the first metadata is shared by the first service instance and the second service instance. During data processing in the database cluster, the first service instance obtains a first database statement, where the first database statement indicates to update the first data. Then, the first service instance sends a first operation command to the first storage engine instance based on the first database statement. The first storage engine instance updates the first data based on the first operation command to obtain second data, and updates the first metadata to second metadata corresponding to the second data.

In a possible implementation, the at least one storage engine instance further includes a second storage engine instance, the plurality of service instances further include a third service instance, and the second storage engine instance is connected to the third service instance and the storage apparatus; and the method further includes: The third service instance obtains a second database statement, where the second database statement indicates to update the second data; the third service instance sends a second operation command to the second storage engine instance based on the second database statement; the second storage engine instance updates the second data based on the second operation command, to obtain third data; and the second storage engine instance updates the second metadata to third metadata corresponding to the third data.

In a possible implementation, the storage apparatus includes a first sub-storage apparatus and a second sub-storage apparatus, the first sub-storage apparatus is configured to store the first data and the first metadata, and the first sub-storage apparatus and the second sub-storage apparatus are configured to store different data and different metadata; the at least one storage engine instance further includes a second storage engine instance, the second storage engine instance is connected to the first service instance, the second service instance, and the second sub-storage apparatus, and the first storage engine instance is connected to the first sub-storage apparatus; and the first storage engine instance is configured to access the first sub-storage apparatus, and the second storage engine instance is configured to access the second sub-storage apparatus.

In a possible implementation, the storage apparatus includes a first data storage apparatus, a second data storage apparatus, and a metadata storage apparatus, the first data storage apparatus is configured to store the first data, the first data storage apparatus and the second data storage apparatus are configured to store different data, and the metadata storage apparatus is configured to store metadata corresponding to data in the first data storage apparatus and metadata corresponding to data in the second data storage apparatus; the at least one storage engine instance further includes a second storage engine instance, the second storage engine instance is connected to the first service instance, the second service instance, and the second data storage apparatus, the first storage engine instance is connected to the first data storage apparatus, and both the first storage engine instance and the second storage engine instance are connected to the metadata storage apparatus; and the first storage engine instance is configured to access the first data storage apparatus and the metadata storage apparatus, and the second storage engine instance is configured to access the second data storage apparatus and the metadata storage apparatus.

In a possible implementation, the method further includes: Before sending the first operation command to the first storage engine instance, the first service instance sets a lock on the first metadata; the first storage engine instance indicates the second service instance to set a lock on the first metadata; after the first metadata is updated to the second metadata, the first service instance releases the lock set on the first metadata; and after updating the first metadata to the second metadata, the first storage engine instance indicates the second service instance to release the lock set on the first metadata.

In a possible implementation, the at least one storage engine instance further includes the second storage engine instance, the plurality of service instances further include the third service instance, and the second storage engine instance is connected to the third service instance and the storage apparatus; and the method further includes: Before updating the first metadata to the second metadata, the first storage engine instance indicates, via the second storage engine instance, the third service instance to set a lock on the first metadata; and after updating the first metadata to the second metadata, the first storage engine instance indicates, via the second storage engine instance, the third service instance to release the lock set on the first metadata.

In a possible implementation, before the first metadata is updated to the second metadata, the first metadata is cached in the first service instance, the second service instance, and the third service instance; and the method further includes: After the first metadata is updated to the second metadata, the first service instance invalidates the first metadata cached in the first service instance; and the first storage engine instance indicates the second service instance to invalidate the first metadata cached in the second service instance, and indicates, via the second storage engine instance, the third service instance to invalidate the first metadata cached in the third service instance.

In a possible implementation, the method further includes: After invalidating the cached first metadata, the second service instance caches the second metadata in the storage apparatus.

In a possible implementation, the method further includes: After the first metadata is updated to the second metadata, the first service instance sends a transaction to the first storage engine instance, where the transaction includes the database statement; and the first storage engine instance commits the transaction.

In a possible implementation, the first storage engine instance fails before committing the transaction, and the method further includes: The second storage engine instance rolls back an update operation on the first data and the first metadata; and the second storage engine instance indicates the third service instance to release the lock set on the first metadata.

In a possible implementation, the first storage engine instance fails after committing the transaction, and the method further includes: The second storage engine instance indicates the third service instance to release the lock set on the first metadata; and the second storage engine instance invalidates the first metadata cached in the third service instance.

The data processing method provided in the second aspect corresponds to the database cluster provided in the first aspect. Therefore, for technical effects of the second aspect or any implementation of the second aspect, refer to the technical effects of the first aspect and corresponding implementations of the first aspect. Details are not described herein again.

According to a third aspect, this application provides a data processing system. The data processing system includes the database cluster according to the first aspect or any implementation of the first aspect, and the storage apparatus according to the first aspect or any implementation of the first aspect.

According to a fourth aspect, this application provides a device cluster, where the device cluster includes at least one compute node and at least one storage node, the at least one compute node is configured to implement the database cluster according to the first aspect or any implementation of the first aspect, and the at least one storage node is configured to implement the storage apparatus according to the first aspect or any implementation of the first aspect.

According to a fifth aspect, this application provides a computer-readable storage medium. The computer-readable storage medium stores instructions, and when the instructions are run on a compute device, the compute device is enabled to perform operation steps in the data processing method according to the second aspect or any implementation of the second aspect.

According to a sixth aspect, this application provides a computer program product including instructions. When the computer program product is run on a compute device, the compute device is enabled to perform operation steps in the data processing method according to the second aspect or any implementation of the second aspect.

In this application, on the basis of the implementations according to the foregoing aspects, the implementations may be further combined to provide more implementations.

### BRIEF DESCRIPTION OF DRAWINGS

FIG. 1 is a diagram of a structure of an example of a data processing system 10 according to this application;
FIG. 2 is a diagram of a structure of another example of a data processing system 10 according to this application;
FIG. 3 is a diagram of a structure of still another example of a data processing system 10 according to this application;
FIG. 4 is a diagram of a structure of yet another example of a data processing system 10 according to this application;
FIG. 5 is a diagram of a storage-computation separation architecture to which a data processing system 10 is applicable;
FIG. 6 is a diagram of a storage-computation integration architecture to which a data processing system 10 is applicable;
FIG. 7A and FIG. 7B are a schematic flowchart of an example of a data processing method according to this application; and
FIG. 8A and FIG. 8B are a schematic flowchart of another example of a data processing method according to this application.

### DESCRIPTION OF EMBODIMENTS

To make the objectives, features, and advantages of this application clearer and more comprehensible, the following describes various non-limitative implementations in embodiments of this application with reference to the accompanying drawings by using examples. It is clear that the described embodiments are merely a part rather than all of embodiments of this application. All other embodiments obtained based on the foregoing content in embodiments of this application shall fall within the protection scope of this application.

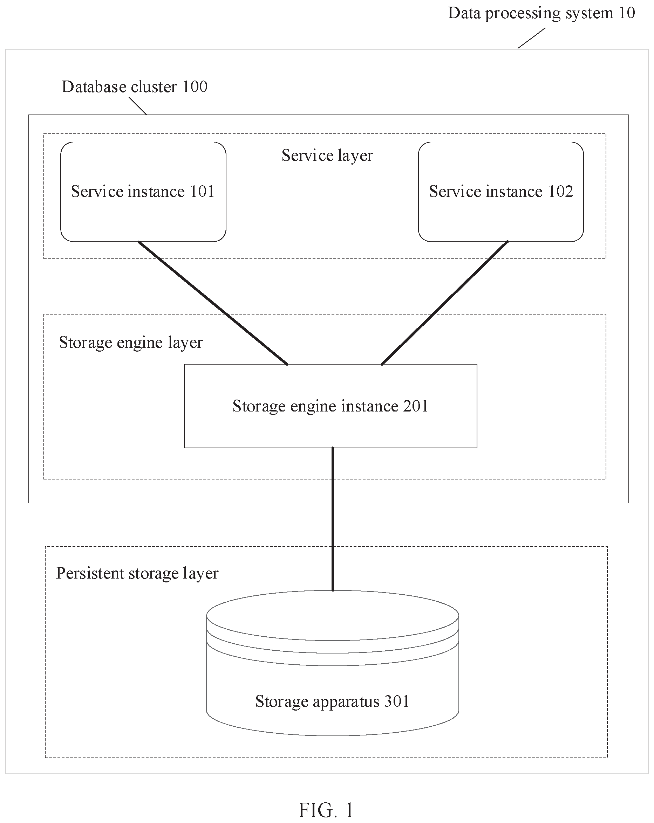

FIG. 1 is a diagram of a structure of an example of a data processing system 10. The data processing system 10 includes a database cluster 100 and a storage apparatus 301. For example, the database cluster 100 may be, for example, a database cluster constructed based on a MySQL database, or may be a database cluster constructed based on another type of database.

As shown in FIG. 1, the database cluster 100 includes a service layer and a storage engine layer. The service layer includes a plurality of service instances. An example in which the service layer includes a service instance 101 and a service instance 102 is used for description in FIG. 1. The storage engine layer includes at least one storage engine instance. An example in which the storage engine layer includes a storage engine instance 201 is used for description in FIG. 1. For example, in the database cluster 100, each service instance may be implemented by using one or more processes, each storage engine instance may be implemented by using one or more processes, and the service instance and the storage engine instance are implemented by using different processes. During actual application, the service instance and the storage engine instance in the database cluster 100 may alternatively be implemented in another manner. This is not limited herein.

The service instance 101 and the service instance 102 are separately connected to the storage engine instance 201. For example, the service instance 101 is connected to the storage engine instance 201. When both the service instance 101 and the storage engine instance 201 are implemented by using a process, the service instance 101 and the storage engine instance 201 may establish a communication connection via a shared memory, that is, the service instance 101 may write data into the shared memory, and the storage engine instance 201 may obtain the data from the shared memory, to implement data transfer between the two processes. Alternatively, the service instance 101 may be connected to the storage engine instance 201 by using a communication network. Similarly, a communication connection may also be established between the service instance 102 and the storage engine instance 201 via a network or via a shared memory. The storage engine instance 201 can provide a service of data reading and writing for a plurality of service instances (for example, the service instance 101 and the service instance 102 in FIG. 1) connected to the storage engine instance 201.

The storage engine instance 201 can access a persistent storage layer, for example, may access the persistent storage layer via a network. As shown in FIG. 1, the persistent storage layer includes the storage apparatus 301. The storage apparatus 301 persistently stores data, and persistently stores metadata corresponding to the data. The metadata is data used to describe the data, for example, attribute information such as a storage location, a data security permission, and a data type of the data. For example, the storage apparatus 301 may store the metadata in a system table (system table) manner, and the system table can be used to store metadata of various data objects. In the data processing system 10 shown in FIG. 1, the data and the metadata that are stored in the storage apparatus 301 can be accessed by the storage engine instance 201.

It should be noted that, in the data processing system 10 shown in FIG. 1, one copy of metadata may be persistently stored in only the storage apparatus 301, and there is no need to persistently store the copy of metadata in the storage apparatus 301 in a local storage area of the service instance 101 and a local storage area of the service instance 102.

After the service instance 101 obtains a database statement indicating to update data 1 in the storage apparatus 301, the service instance 101 may parse the database statement to generate at least one operation command used to update the data 1, and send the at least one operation command to the storage engine instance 201.

After receiving the at least one operation command, the storage engine instance 201 may obtain metadata 1 corresponding to the data 1 from the storage apparatus 301, update the data 1 based on the metadata 1 and the received operation command to generate data 2 (that is, generate new data), and further update the metadata 1 corresponding to the data 1 to metadata 2 corresponding to the data 2.

Because the metadata 1 is stored in the storage apparatus 301, and the storage engine instance 201 can access the metadata 1 in the storage apparatus 301, the service instance 101 and the service instance 102 can share the same copy of metadata in the storage apparatus 301 by using the storage engine instance 201. In this way, after the service instance 101 updates, by using the storage engine instance 201, the metadata 1 corresponding to the data 1 in the storage apparatus 301 to the metadata 2 corresponding to the data 2, a metadata synchronization process does not need to be performed, that is, the metadata 2 may not need to be synchronized to the local storage area (used for persistent storage) of the service instance 101 and the local storage area of the service instance 102, to avoid resource consumption caused by metadata synchronization in the database cluster 100, so that the database cluster 100 can use more resources to process services. This improves performance of the database cluster 100.

In addition, the service instance 101 and the service instance 102 can share the same copy of metadata in the storage apparatus 301 by using the storage engine instance 201, so that the service instance 101 and the service instance 102 do not need to separately and persistently store a copy of metadata in a local storage area, to avoid storage resource consumption caused by persistently storing a plurality of copies of metadata in the database cluster 100. In this way, the database cluster 100 can use more storage resources to process services, to further improve performance of the database cluster 100.

In addition, in an initialization process of the database cluster 100 and the storage apparatus 301, only one service instance in the database cluster 100 may create, in the storage apparatus 301, the system table used to store the metadata, so that the storage apparatus 301 can be initialized, to simplify the initialization process of the database cluster 100.

In addition to updating the storage apparatus 301, the storage engine instance 201 may also read the data in the storage apparatus 301, and provide the data for the service instance 101.

It should be noted that the data processing system 10 shown in FIG. 1 is merely used as an example for description, and is not intended to constitute a limitation.

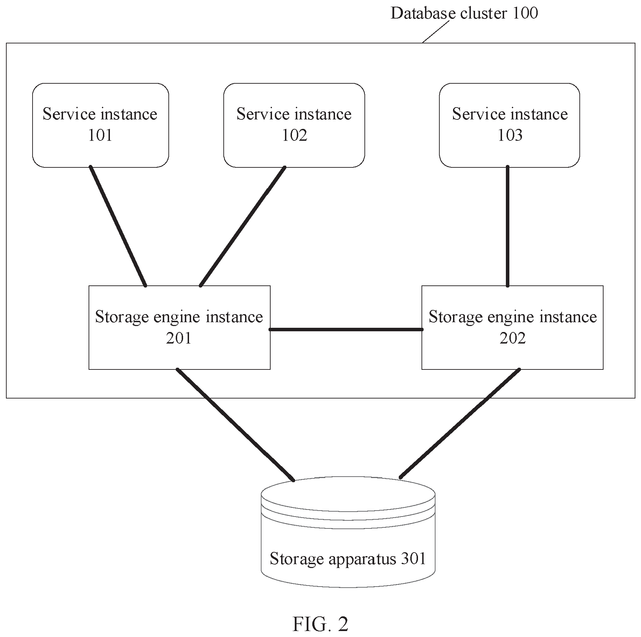

Refer to FIG. 2. In a first alternative implementation example, on the basis of the data processing system 10 shown in FIG. 1, the service layer may further include a service instance 103, the storage engine layer may further include a storage engine instance 202, and the storage engine instance 202 is separately connected to the service instance 103 and the storage apparatus 301, and provides a service of data reading and writing for the service instance 103 by accessing the storage apparatus 301. The storage engine instance 201 and the storage engine instance 202 may be storage engine instances of a same type, or may be storage engine instances of different types. In addition, the storage engine instance 201 and the storage engine instance 202 can share and access the data in the storage apparatus 301 at the persistent storage layer. During actual application, the storage apparatus 301 may also be referred to as shared storage. In this way, after the metadata in the storage apparatus 301 is updated, network resource consumption caused by the storage engine instance 201 sending updated metadata to the storage engine instance 202 can be avoided.

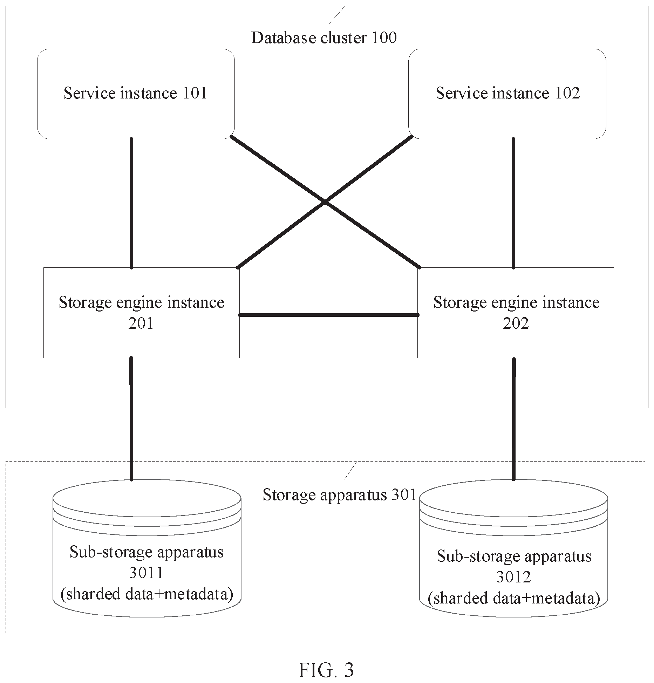

Refer to FIG. 3. In a second alternative implementation example, on the basis of the data processing system 10 shown in FIG. 1, the storage apparatus 301 in the persistent storage layer may include a plurality of sub-storage apparatuses. An example in which the storage apparatus 301 includes a sub-storage apparatus 3011 and a sub-storage apparatus 3012 is used for description in FIG. 3. Each sub-storage apparatus is configured to store a part of data in the apparatus 301 and metadata corresponding to the part of data, and different sub-storage apparatuses are configured to store different parts of data and metadata. In an actual application scenario, the data in the storage apparatus 301 may be divided into a plurality of shards, and each sub-storage apparatus may store one or more shards. For example, a value range of a primary key may be divided into a plurality of intervals based on the primary key of the data in the storage apparatus 301, so that each sub-storage apparatus may store data whose primary key is located in one or more intervals, and primary keys of the data stored in different sub-storage apparatuses are located in different intervals.

In addition, on the basis of the database cluster 100 shown in FIG. 1, the storage engine layer may further include the storage engine instance 202, and the storage engine instance 202 is separately connected to the service instance 101 and the service instance 102. In this case, the storage engine instance 201 is specifically connected to the sub-storage apparatus 3011, and the storage engine instance 202 is specifically connected to the sub-storage apparatus 3012. Therefore, the storage engine instance 201 and the storage engine instance 202 are respectively responsible for accessing different sub-storage apparatuses. Specifically, the storage engine instance 201 may be responsible for reading and writing data and metadata in the sub-storage apparatus 3011, and the storage engine instance 202 may be responsible for reading and writing data and metadata in the sub-storage apparatus 3012. In this way, the service instance 101 and the service instance 102 may access, by using the storage engine instance 201, sharded data A and metadata corresponding to the sharded data A in the sub-storage apparatus 3011, and access, by using the storage engine instance 202, sharded data B and metadata corresponding to the sharded data B that are stored in the sub-storage apparatus 3012.

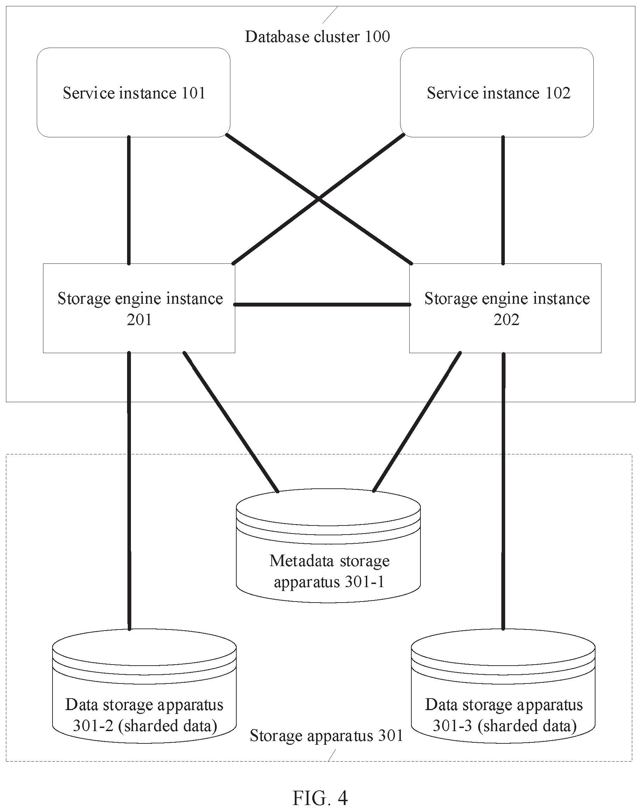

Refer to FIG. 4. In a third alternative implementation example, on the basis of the data processing system 10 in FIG. 1, the storage apparatus 301 in the persistent storage layer may include a metadata storage apparatus and a plurality of data storage apparatuses. An example in which the storage apparatus 301 includes a metadata storage apparatus 301-1, a data storage apparatus 301-2, and a data storage apparatus 301-3 is used for description in FIG. 3. Each data storage apparatus is configured to store a part of data in the apparatus 301, and different data storage apparatuses are configured to store different parts of data. The metadata storage apparatus 301-1 is configured to store metadata corresponding to all data. In other words, metadata corresponding to data in each data storage apparatus may be centrally stored in the metadata storage apparatus 301-1.

In addition, on the basis of the database cluster 100 shown in FIG. 1, the storage engine layer may further include the storage engine instance 202, and the storage engine instance 202 is separately connected to the service instance 101 and the service instance 102. In this case, the storage engine instance 201 is separately connected to the metadata storage apparatus 301-1 and the data storage apparatus 301-2, and the storage engine instance 202 is separately connected to the metadata storage apparatus 301-1 and the data storage apparatus 301-3. The storage engine instance 201 and the storage engine instance 202 are respectively responsible for accessing different data storage apparatuses, and both can access the metadata storage apparatus 301-1.

A specific architecture of the data processing system 10 is not limited in this application. For example, during actual application, the database clusters 100 shown in FIG. 1 to FIG. 4 may be further combined to obtain a new data processing system.

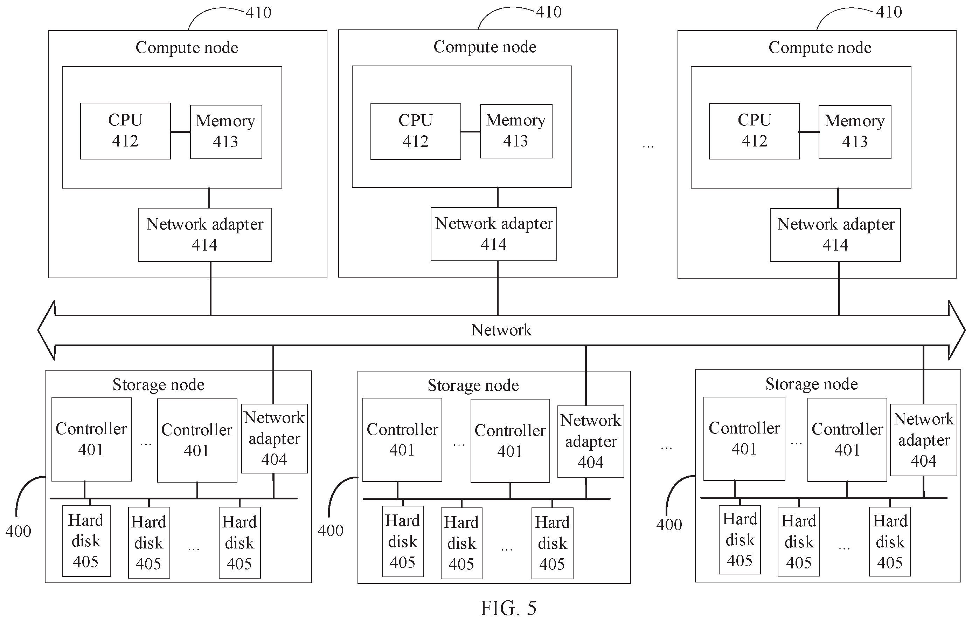

During actual application, in a first implementation, the data processing systems 10 shown in FIG. 1 to FIG. 4 may be applicable to a device cluster that uses a storage-computation separation architecture shown in FIG. 5.

The storage-computation separation architecture shown in FIG. 5 may include a plurality of compute nodes 410 and a plurality of storage nodes 400.

A service instance and a storage engine instance may be deployed on each compute node 410. For example, the service instance 101 and the storage engine instance 201 in FIG. 1 may be deployed on one compute node 410, and the service instance 102 may be deployed on another compute node 410. In addition, different compute nodes 410 may communicate with each other, so that network communication between the service instance 101 and the service instance 102 may be completed through network communication between the compute node 410 and the compute node 410. Alternatively, the service instance 101, the service instance 102, and the storage engine instance 201 in FIG. 1 may all be deployed on one same compute node 410. The storage apparatus 301 in FIG. 1 may be implemented by using one or more storage nodes 400.

Each compute node 410 is a compute device, such as a server or a desktop computer, that includes a processor. The processor may be a central processing unit (central processing unit, CPU). In terms of hardware, as shown in FIG. 5, the compute node 410 includes at least a CPU 412, a memory 413, and a network adapter 414. The CPU 412 is configured to process a database statement from outside the compute node 410 or a database statement generated inside the compute node 410. When the CPU 412 reads data from the memory 413, or when a total amount of data in the memory 413 reaches a specific threshold, the CPU 412 sends data stored in the memory 413 to the storage node 400 for persistent storage. FIG. 5 shows only one CPU 412. During actual application, the compute node usually includes a plurality of CPUs 412, and one CPU 412 has one or more CPU cores. A quantity of CPUs and a quantity of CPU cores are not limited in embodiments.

The memory 413 is an internal storage that directly exchanges data with the processor. The memory can read and write data at a high speed at any time, and serves as a temporary data storage of an operating system or another running program. The memory includes at least two types of storages. For example, the memory may be a random access memory, or may be a read-only memory (Read-Only Memory, ROM). During actual application, a plurality of memories 413 and different types of memories 413 may be configured in the compute node 410. A quantity and types of memories 413 are not limited in this embodiment.

The network adapter 414 is configured to communicate with the storage node 400 or another compute node 410. For example, when a total amount of data in the memory 413 reaches a specific threshold, the compute node 410 may send a request to the storage node 400 through the network adapter 414, to perform persistent storage on the data. In addition, the compute node 410 may further include a bus configured for communication between components inside the compute node 410. During actual implementation, the compute node 410 may alternatively have a small quantity of built-in hard disks, or may be connected to a small quantity of external hard disks.

Each compute node 410 may access the storage node 400 via a network. Each storage node 400 may include a controller 401, a network adapter 404, and a hard disk 405, and a quantity of controllers 401, a quantity of network adapters 404, and a quantity of hard disks 405 may be any quantity. The network adapter 404 is configured to communicate with the compute node 410, or may communicate with another storage node 400. The hard disk 405 is configured to persistently store data, and may be a magnetic disk or another type of storage medium, for example, a solid-state disk or a shingled magnetic recording hard disk. The controller 401 is configured to: convert, based on a data read/write request sent by the compute node 410, an address carried in the data read/write request into an address that can be identified by the hard disk, and write data into the hard disk 405 or read data from the hard disk 405 based on the address.

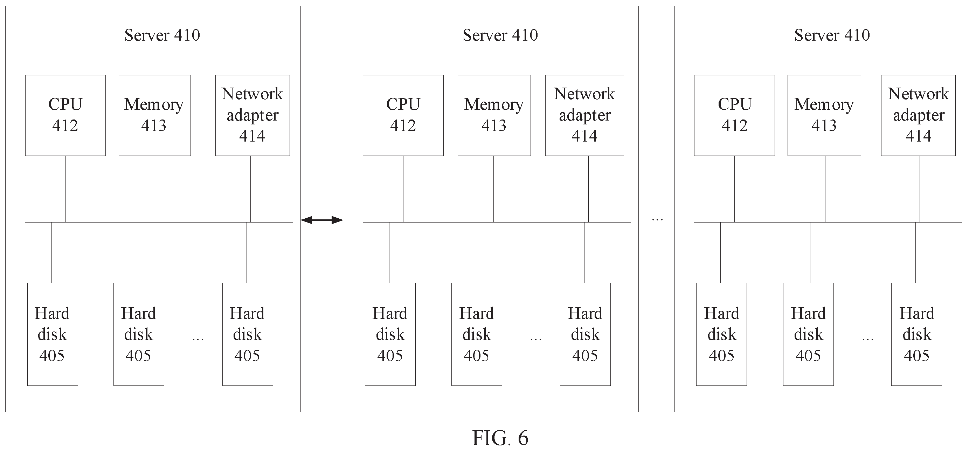

In a second implementation, the data processing systems 10 shown in FIG. 1 to FIG. 4 may be applicable to a device cluster that uses a storage-computation integration architecture shown in FIG. 6.

The storage-computation integration architecture shown in FIG. 6 may include a plurality of servers 410.

A service instance and a storage engine instance may be deployed on each server 410. For example, the service instance 101 and the storage engine instance 201 in FIG. 1 may be deployed on one server 410, and the service instance 102 may be deployed on another server 410. In addition, the servers 410 may communicate with each other, so that network communication between the service instance 101 and the service instance 102 may be completed through network communication between the server 410 and the server 410. Alternatively, the service instance 101, the service instance 102, and the storage engine instance 201 in FIG. 1 may all be deployed on one same server 410. The storage apparatus 301 in FIG. 1 may be implemented by using the hard disk 405 in one or more servers 410.

Each server 410 may be a device having a computational power and a storage capability. In terms of hardware, as shown in FIG. 6, the server 410 includes at least the CPU 412, the memory 413, the network adapter 414, and the hard disk 405. For specific implementations of the CPU 412, the memory 413, the network adapter 414, and the hard disk 405, refer to the foregoing descriptions related to the CPU 412, the memory 413, the network adapter 414, and the hard disk 405 in the architecture shown in FIG. 5. Details are not described herein again.

For ease of understanding and description, the following describes in detail, based on the data processing system 10 shown in FIG. 1, a process in which the database cluster 100 updates the data and the metadata in the storage apparatus 301.

Generally, in a running process, the service instance 101 and the service instance 102 may obtain a database statement, for example, receive a database statement sent by a user via a client, or the service instance 101 and the service instance 102 automatically generate a database statement in a service execution process, or the like. For example, the database statement may be, for example, a structured query language (structured query language, SQL) statement, and may be specifically a data definition language (data definition language, ddl) statement in the SQL statement; or the database statement may be another type of statement. This is not limited in this embodiment. For ease of understanding, in this embodiment, an example in which the service instance 101 obtains a database statement is used for description, and the database statement indicates to update the data 1 in the storage apparatus 301.

After obtaining the database statement, the service instance 101 may obtain metadata from the storage apparatus 301 by using the storage engine instance 201, and perform lexical analysis, syntax analysis, and semantic check on the database statement based on the metadata, to determine whether the database statement is valid, and generate a corresponding syntax analysis tree. When it is determined that the database statement is valid, the service instance 101 may optimize the syntax analysis tree by using an optimizer, to generate an execution plan tree corresponding to the database statement. Operations sequentially executed in a process of updating the data 1 in the storage apparatus 301 may be defined in the execution plan tree. Then, the service instance 101 may generate one or more operation commands based on the execution plan tree. The operation command indicates a specific operation performed when the storage engine instance 201 updates the data 1 and the metadata 1 corresponding to the data 1 in the storage apparatus 301.

During actual application, before obtaining the database statement, the service instance 101 may preload the metadata stored in the storage apparatus 301. For example, the metadata in the storage apparatus 301 may be stored in a cache area of the service instance 101 in a data dictionary (data dictionary) manner, to improve efficiency of parsing the database statement by the service instance 101. A data dictionary is a directory used to record metadata, and the metadata included in the data dictionary may be loaded from the storage apparatus 301.

In the database cluster 100, because a plurality of service instances may all read any data in the storage apparatus 301 or modify any data by using the storage engine instance 201, when a specific service instance updates data in the storage apparatus 301 by using the storage engine instance, the service instance may set a lock on metadata corresponding to the data, and notify a remaining service instance to set a lock on the metadata, to prohibit the remaining service instance from updating (and reading) the data described by the metadata, so that it is ensured that the plurality of service instances do not concurrently modify same data or same metadata.

In an implementation instance, the service instance 101 sets a lock on the metadata 1 in a process of generating the operation command (or before generating the operation command), and notifies the storage engine instance 201 of the setting. For example, the service instance 101 may set, based on a metadata lock (metadata lock, MDL) mechanism, a value of a lock variable (for example, MDL_lock) corresponding to the metadata 1 to a write lock state or the like, and write the lock variable into the shared memory between the service instance 101 and the storage engine instance 201, so that the storage engine instance 201 determines, based on the value of the lock variable in the shared memory, that a lock is already set on the metadata 1. Then, the storage engine instance 201 may notify, via the shared memory, the service instance 102 to set a lock on the metadata 1 cached by the service instance 102. In this way, the service instance 102 may set a lock on the metadata 1 cached by the service instance 102, so that in a process in which the metadata 1 has the lock, the service instance 102 is prohibited from updating or reading the data 1 described by the metadata 1. The storage engine instance 201 may establish different shared memory channels with the service instance 101 and the service instance 102, to communicate with the different service instances based on the different shared memory channels.

Further, when the database cluster 100 may further include the storage engine instance 202 and the service instance 103 shown in FIG. 2, after determining that a lock is already set on the metadata 1, the storage engine instance 201 may further generate a lock message, and send the lock message to the storage engine instance 202 by using a communication network. The lock message includes the metadata 1. The storage engine instance 202 may notify, based on the lock message via the shared memory between the storage engine instance 202 and the service instance 103, the service instance 103 to set a lock on the metadata 1.

After completing setting of the lock, the service instance 102 (and another service instance) may notify, by using the storage engine instance 201 (and another storage engine instance), the service instance 101 that setting of the lock on the metadata 1 is already completed. Specifically, a response indicating that setting is already completed may be fed back to the service instance 101. In this way, the service instance 101 may sequentially deliver the generated at least one operation command to the storage engine instance 201. For example, the operation command may include a keyword indicating an operation, for example, "CREATE", "ALTER", or "DROP", which sequentially represents creating, modifying, or deleting data in the storage apparatus 301. The operation command may further include related information of an operated object (namely, the data 1).

In this embodiment, the storage engine instance 201 may sequentially execute received operation commands, and perform a corresponding update operation on the data 1 in the storage apparatus 301, to update the data 1 stored in the storage apparatus 301 to the data 2. For example, the storage engine instance 201 may create a new table in the storage apparatus 301, and store data by using the new table; or the storage engine instance 201 may modify data in a part of the table in the storage apparatus 301; or the storage engine instance 201 may delete a part of the table in the storage apparatus 301, or delete a part of data in a part of the table. Correspondingly, in a process of executing the operation command, the storage engine instance 201 further generates the metadata 2 for the data 2, and updates the metadata 1 in the storage apparatus 301 to the metadata 2, to implement synchronous update of the data and the metadata in the storage apparatus 301.

After executing the operation command, the storage engine instance 201 may feed back a response to the service instance 101, to notify the service instance 101 that execution of the operation command is already completed.

Because the metadata 1 in the storage apparatus 301 is already updated to the metadata 2, that is, the metadata 1 cached in each service instance is already expired, after receiving a response indicating that execution has been completed and fed back by the storage engine 201, the service instance 101 may invalidate the currently cached metadata 1. For example, the service instance 101 may invalidate a cached data dictionary (including the metadata 1), to prevent the service instance 101 from subsequently performing an incorrect data processing process based on the expired metadata 1.

In addition, the service instance 101 may further notify another service instance to invalidate the metadata 1 cached by the another service instance.

During specific implementation, the service instance 101 may generate an invalidation message, where the invalidation message may include the metadata 1, and indicates to invalidate the metadata 1. Then, the service instance 101 may provide the invalidation message to the storage engine instance 201 via the shared memory. Then, the storage engine instance 201 may send the invalidation message to the service instance 102 via the shared memory. In this way, the service instance 102 may invalidate, based on the invalidation message in the shared memory, the metadata 1 cached by the service instance 102.

Further, when the database cluster 100 may further include the storage engine instance 202 and the service instance 103 shown in FIG. 2, the storage engine instance 201 may send the invalidation message to the storage engine instance 202 via a network, so that the storage engine instance 202 may provide the invalidation message for the service instance 103 via the shared memory. In this way, the service instance 103 may invalidate, based on the invalidation message, the metadata 1 cached by the service instance 103. During actual application, when the storage engine instance 201 or the storage engine instance 202 is connected to a plurality of service instances, the storage engine instance 201 and the storage engine instance 202 may notify all service instances (except the service instance 101) connected to the storage engine instance 201 and the storage engine instance 202 to invalidate the metadata 1 cached by these service instances.

The foregoing uses an example in which the service instance 101 notifies another service instance to invalidate the cached metadata 1. In another embodiment, after executing the operation command, the storage engine instance 201 may actively notify another service instance to invalidate the metadata 1 cached by the another service instance. This is not limited herein.

After invalidating the metadata 1, the service instance 102 (and a remaining service instance) may feed back an invalidation completion response to the service instance 101 by using the storage engine instance 202 and the storage engine instance 201, to notify the service instance 101 that invalidation of the metadata 1 is already completed.

During actual application, after invalidating the data dictionary (including the metadata 1), the service instance 101 and the service instance 102 in the database cluster 100 may access, by using the storage engine instance 201, metadata of the latest version stored in the storage apparatus 301, namely, the metadata 2, so that the service instance 101 and the service instance 102 may generate a new data dictionary by loading the metadata 2, and cache the new data dictionary. In this way, different service instances may load the same copy of metadata to generate a data dictionary, thereby ensuring consistency of metadata cached by different service instances.

Because a lock corresponding to the metadata 1 exists in each service instance, after receiving the invalidation completion response, the service instance 101 may release the lock set on the metadata 1, for example, set the value of the lock variable corresponding to the metadata 1 to an unlocked state. In addition, the service instance 101 may notify, via the shared memory, the storage engine instance 201 that the metadata 1 is already unlocked. In this way, the storage engine instance 201 may notify, via the shared memory between the storage engine instance 201 and the service instance 102, the service instance 102 to release the lock set on the metadata 1.

Further, when the database cluster 100 may further include the storage engine instance 202 and the service instance 103 shown in FIG. 2, the storage engine instance 201 may generate an unlock message, and send the unlock message to the storage engine instance 202 by using the communication network. The unlock message includes the metadata 1. After receiving the unlock message, the storage engine instance 202 may provide the unlock message for the service instance 103 via the shared memory between the storage engine instance 202 and the service instance 103, so that the service instance 103 can release the lock set on the metadata 1 based on the unlock message. During actual application, when the storage engine instance 201 and the storage engine instance 202 are connected to a plurality of service instances, the storage engine instance 201 and the storage engine instance 202 may further notify, via shared memories, the plurality of service instances (except the service instance 101) to release the lock set on the metadata 1.

In a further possible implementation, because a fault may occur in a process in which the storage engine instance 201 updates the data and the metadata in the storage apparatus 301, before invalidating the metadata 1 and releasing the lock set on the metadata 1, the service instance 101 may ensure atomicity of updating the storage apparatus 301 by committing a transaction.

In the data processing system 10 shown in FIG. 2, after determining that the storage engine instance 201 already executes the operation command (before invalidating the metadata 1), the service instance 101 may send a transaction to the storage engine instance 201. The transaction records an update operation on the data 1 and the metadata 1. For example, the transaction includes the database statement obtained by the service instance 101, so that the storage engine instance 201 performing an operation of committing the transaction, for example, marking the database statement as a "commit" state in a log, indicates that the transaction is already committed. In this way, when the storage engine instance 201 feeds back that the transaction is successfully committed, the service instance 101 executes a corresponding process of invalidating the metadata 1 and releasing the metadata 1. If the storage engine instance 201 feeds back, to the service instance 101, that the transaction submission fails, the service instance 101 may indicate the storage engine instance 201 to roll back the update operation on the data 1 and the metadata 1, to restore the storage apparatus 301 to a state before the data is updated.

If the storage engine instance 201 fails before successfully committing the transaction, the storage engine instance 202 may take over a subsequent processing procedure for the database statement. Specifically, because the transaction is not successfully committed, the storage engine instance 202 rolls back the update operation performed by the storage engine instance 201 on the data 1 and the metadata 1 in the storage apparatus 301, that is, restores the data 2 and the metadata 2 in the storage apparatus 301 to the data 1 and the metadata 1. In addition, because the lock corresponding to the metadata 1 still exists in the service instance 103, the storage engine instance 202 may notify, via the shared memory, the service instance 103 to release the lock set on the metadata 1, so that the metadata 1 cached in the service instance 103 remains valid, that is, the service instance 103 may still access the data 1 in the storage apparatus 301 by using the metadata 1 subsequently. In this way, fault recovery for the storage engine instance 201 can be implemented through taking over by the storage engine instance 202.

If the storage engine instance 201 fails after successfully committing the transaction, the update operation on the storage apparatus 301 takes effect, that is, the data and the metadata stored in the storage apparatus 301 are the data 2 and the metadata 2 after update. In this case, that the storage engine instance 202 takes over the subsequent processing procedure for the database statement may be specifically: The storage engine instance 202 may notify, via the shared memory, the service instance 103 to invalidate the cached metadata 1, and notify the service instance 103 to release the lock set on the metadata 1, to implement fault recovery for the storage engine instance 201.

It should be noted that this embodiment is described by using an example in which the service instance 101 updates the data 1 and the metadata 1 in the storage apparatus 301. For an implementation process in which the service instance 101 updates other data and other metadata in the storage apparatus 301, and an implementation process in which the service instance 102 updates other data and other metadata in the storage apparatus 301 (and another database), refer to the foregoing related descriptions. Details are not described herein again.

It should be noted that the foregoing uses the data processing system 10 shown in FIG. 1 as an example to describe the process in which the database cluster 100 updates the data and the metadata in the storage apparatus 301. In the data processing systems 10 shown in FIG. 2 to FIG. 4, a specific implementation process in which the service instance 101 updates the data and the metadata in the storage apparatus 301 is similar to an implementation process of updating the data and the metadata in the storage apparatus 301 in the data processing system 10 shown in FIG. 1. For understanding, refer to related descriptions in the foregoing embodiment. Details are not described herein again.

For ease of understanding, the following describes embodiments of the data processing method provided in this application with reference to the accompanying drawings.

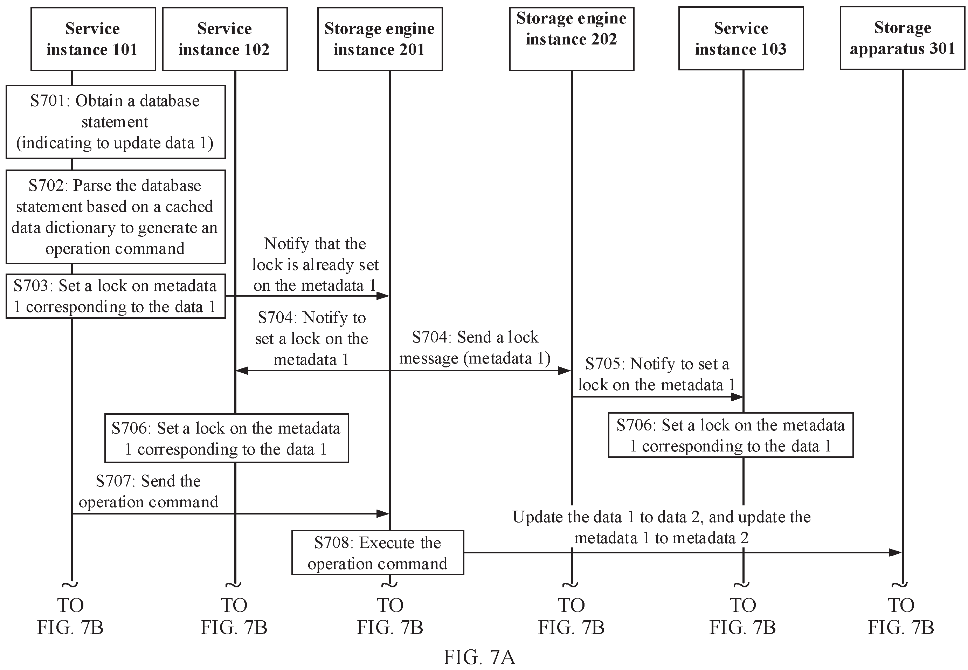

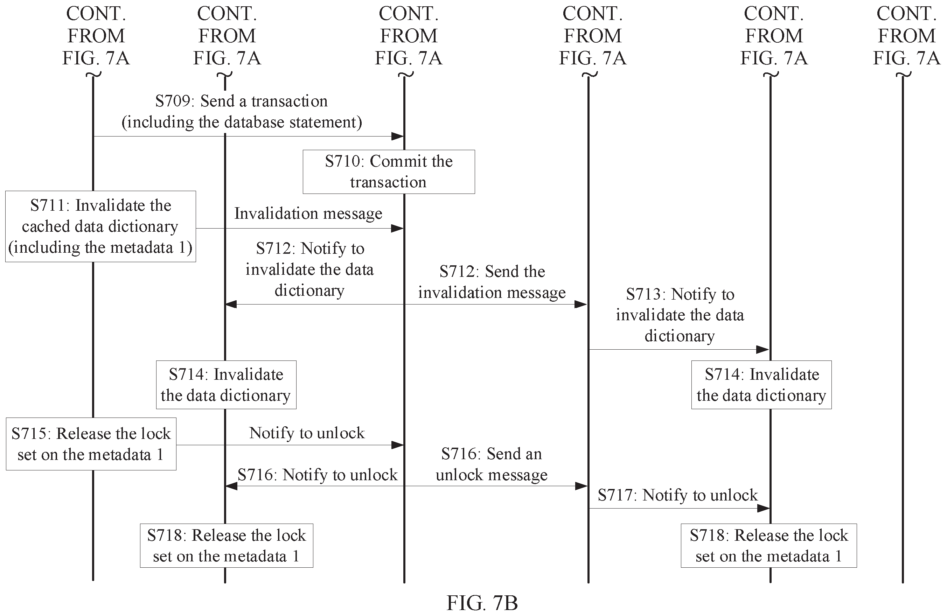

FIG. 7A and FIG. 7B are a schematic flowchart of a data processing method according to an embodiment of this application. The method may be applied to the data processing system 10 shown in FIG. 1 or FIG. 2, or may be applied to another data processing system to which the method is applicable. For ease of description, in this embodiment, an example in which the data processing method is applied to the data processing system 10 shown in FIG. 2 is used to describe a process in which the service instance 101 updates data and metadata in the storage apparatus 301 by using the storage engine instance 101.

The data processing method shown in FIG. 7A and FIG. 7B may specifically include the following steps.

S701: The service instance 101 obtains a database statement, where the database statement indicates to update data 1 in the storage apparatus 301.

For example, the database statement may be, for example, a DDL statement. The database statement may be sent by a user to the service instance 101 via a client or another device, or the service instance 101 may generate a corresponding database statement during operation.

S702: The service instance 101 parses the database statement based on a cached data dictionary, to generate an operation command.

In this embodiment, the service instance 101 (as well as the service instance 103 and the service instance 102) may preload metadata from the storage apparatus 301, and generate the data dictionary in a local cache area based on the loaded metadata, to improve efficiency of parsing the database statement by using the cached data dictionary.

S703: The service instance 101 sets a lock on metadata 1 corresponding to the data 1, and notifies, via a shared memory 1, the storage engine instance 201 of the setting.

S704: The storage engine instance 201 notifies, via a shared memory 2, the service instance 102 to set a lock on the metadata 1 cached by the service instance 102, and sends a lock message to the storage engine instance 202.

The lock message may include the metadata 1.

S705: The storage engine instance 202 notifies, via a shared memory 3, the service instance 103 to set a lock on the metadata 1.

S706: The service instance 103 and the service instance 102 set locks on the metadata 1 in the cached data dictionaries.

During actual application, after setting the locks on the metadata 1, the service instance 103 and the service instance 102 may feed back responses to the service instance 101 by using the storage engine instance 201 and the storage engine instance 202, to notify the service instance 101 that the service instance 103 and the service instance 102 have already completed setting the locks on the metadata 1.

S707: The service instance 101 sends the operation command to the storage engine instance 201 via the shared memory 1.

S708: The storage engine instance 201 executes the operation command, to update the data 1 and the metadata 1 in the storage apparatus 301 to data 2 and metadata 2 respectively.

After updating the data and the metadata, the storage engine instance 201 may feed back, to the service instance 101 via the shared memory 1, a response indicating that execution of the operation command has been completed.

S709: The service instance 101 sends a transaction to the storage engine instance 201 via the shared memory 1, where the transaction includes the database statement obtained by the service instance 101.

S710: The storage engine instance 201 commits the transaction.

In this embodiment, the database cluster 100 supports providing a transaction mechanism, to ensure atomicity of an update operation performed by each service instance on the storage apparatus 301.

After successfully committing the transaction, the storage engine instance 201 may feed back, to the service instance 101 via the shared memory 1, a response indicating that the transaction has been successfully committed.

S711: The service instance 101 invalidates the cached data dictionary, where the data dictionary includes the metadata 1, and notifies, via the shared memory 1, the storage engine instance 201 of the invalidation.

S712: The storage engine instance 201 notifies, via the shared memory 2, the service instance 102 to invalidate the cached data dictionary, and sends an invalidation message to the storage engine instance 202.

S713: The storage engine instance 202 notifies, via the shared memory 3, the service instance 103 to invalidate the cached data dictionary.

S714: The service instance 103 and the service instance 102 perform an operation of invalidating the data dictionaries.

After invalidating the data dictionaries, the service instance 103 and the service instance 102 may feed back responses to the service instance 101 by using the storage engine instance 201 and the storage engine instance 202, to notify the service instance 101 that the service instance 103 and the service instance 102 have already completed invalidation of the data dictionaries.

S715: The service instance 101 releases the lock set on the metadata 1 corresponding to the data 1, and notifies, via the shared memory 1, the storage engine instance 201 of the release.

S716: The storage engine instance 201 notifies, via the shared memory 2, the service instance 102 to release the lock set on the metadata 1 cached by the service instance 102, and sends an unlock message to the storage engine instance 202.

The unlock message may include the metadata 1.

S717: The storage engine instance 202 notifies, via the shared memory 3, the service instance 103 to release the lock set on the metadata 1.

S718: The service instance 103 and the service instance 102 release the locks set on the metadata 1.

Because the metadata 1 is stored in the storage apparatus 301, and both the storage engine instance 201 and the storage engine instance 202 can access the metadata 1 in the storage apparatus 301, the service instance 101, the service instance 103, and the service instance 102 can share the same copy of metadata in the storage apparatus 301 by using the storage engine instance 201 and the storage engine instance 202. In this way, after the service instance 101 updates, by using the storage engine instance 201, the metadata 1 in the storage apparatus 301 to the metadata 2, the metadata 2 after update does not need to be synchronized to a local storage area of the service instance 103 and a local storage area of the service instance 102, to avoid resource consumption caused by metadata synchronization in the database cluster 100, so that the database cluster 100 can process services based on more resources. This improves performance of the database cluster 100.

In addition, the service instance 101, the service instance 103, and the service instance 102 can share the same copy of metadata in the storage apparatus 301 by using the storage engine instance 201, so that the database cluster 100 does not need to separately and persistently store a copy of metadata locally in the service instance 101, the service instance 103, and the service instance 102 like a standalone database, to avoid storage resource consumption caused by persistently storing a plurality of copies of metadata in the database cluster 100. In this way, the database cluster 100 can process services based on more storage resources, to further improve performance of the database cluster 100.

In addition, the database cluster 100 supports a transaction mechanism, so that modification of the data and the metadata in the storage apparatus 301 by the database cluster 100 can be completed within a single transaction. This can ensure atomic modification of data and metadata.

Further, after the metadata 1 in the storage apparatus 301 is updated, each service instance invalidates the data dictionary (including the metadata 1), and may generate a new data dictionary (including the metadata 2) by loading a same copy of metadata from the storage apparatus 301, to ensure consistency of metadata cached in different service instances.

Similarly, the service instance 103 may also update the data and the metadata in the storage apparatus 301 by using the storage engine instance 202.

Specifically, an example in which the service instance 103 continues to update the data 2 and the metadata 2 in the storage apparatus 301 is used. In a running process, the service instance 103 may generate a new database statement, where the new database statement is used to update the data 2 and the metadata 2 in the storage apparatus 301. Then, the service instance 101 may parse the new database statement based on a cached data dictionary (for example, metadata may be reloaded from the persistent storage layer to generate the data dictionary), to generate a new operation command, and send the new operation command to the storage engine instance 202. The storage engine instance 202 updates the data 2 in the storage apparatus 301 to data 3 based on the received operation command, and updates the metadata 2 in the storage apparatus 301 to metadata 3, to update the data and the metadata in the storage apparatus 301.

During actual application, in a process of updating the data 2 and the metadata 2, processes such as setting a lock on the metadata 2, invalidating the data dictionary, committing a transaction, and releasing the lock set on the metadata 2 may be further performed with reference to the method procedure shown in FIG. 7A and FIG. 7B. For details, refer to related descriptions in the embodiment shown in FIG. 7A and FIG. 7B. Details are not described herein again.

It should be noted that, the method steps in the embodiment shown in FIG. 7A and FIG. 7B are merely used as an example for description, and are not intended to constitute a limitation. In another embodiment, another sequence may be used for performing the steps. This is not limited herein. In addition, a part of method steps in the embodiment shown in FIG. 7A and FIG. 7B may not be performed. For example, steps related to caching the data dictionary and invalidating the data dictionary may not be performed.

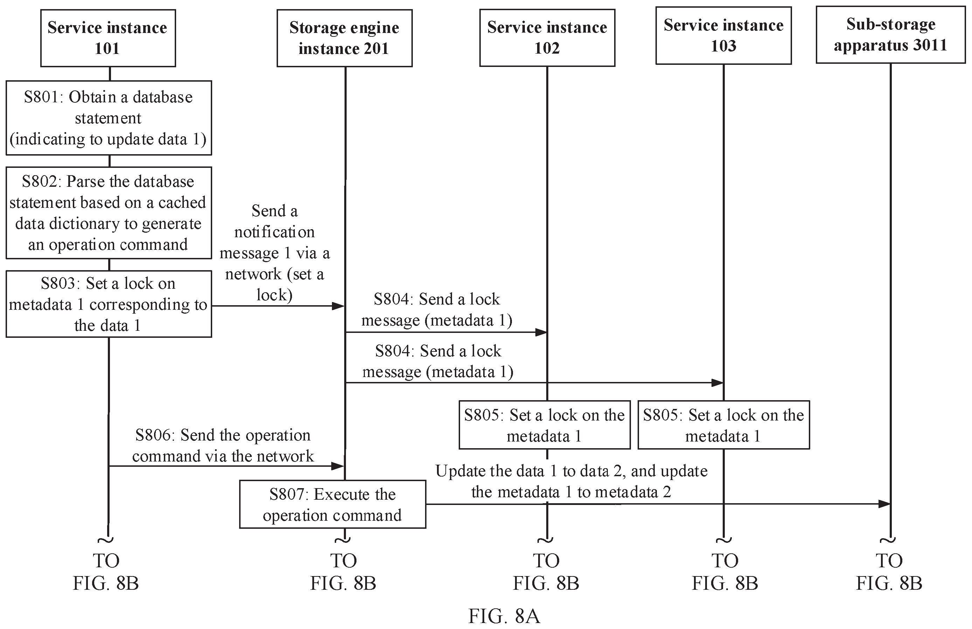

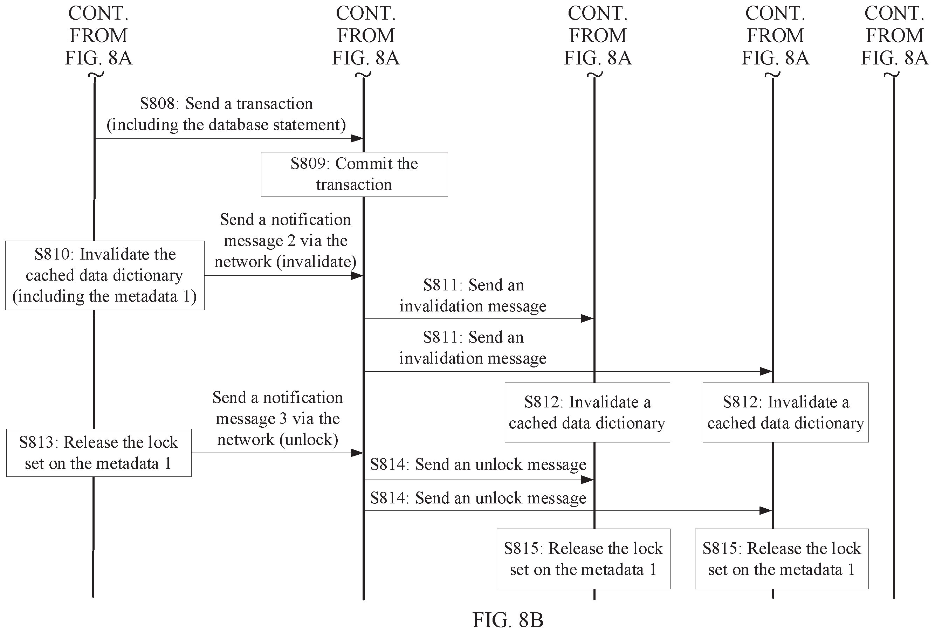

FIG. 8A and FIG. 8B are a schematic flowchart of a data processing method according to an embodiment of this application. The method may be applied to the data processing system 10 shown in FIG. 3 or FIG. 4, or may be applied to another data processing system to which the method is applicable. For ease of description, in this embodiment, an example in which the data processing method is applied to the data processing system 10 shown in FIG. 3 is used to describe a process in which the service instance 101 updates data and metadata in the sub-storage apparatus 3011 by using the storage engine instance 101.

The data processing method shown in FIG. 8A and FIG. 8B may specifically include the following steps.

S801: The service instance 101 obtains a database statement, where the database statement indicates to update data 1 in the sub-storage apparatus 3011.

S802: The service instance 101 parses the database statement based on a cached data dictionary, to generate an operation command.

S803: The service instance 101 sets a lock on metadata 1 corresponding to the data 1, and sends a notification message 1 to the storage engine instance 201 via a network, to notify that the lock is already set on the metadata 1.

S804: The storage engine instance 201 separately sends a lock message to the service instance 103 and the service instance 102, where the lock message includes the metadata 1.

S805: The service instance 103 and the service instance 102 separately set a lock on the metadata 1 in a cached data dictionary.

After setting the locks on the metadata 1, the service instance 103 and the service instance 102 may separately feed back a response to the service instance 101 by using the storage engine instance 201, to notify the service instance 101 that the service instance 103 and the service instance 102 have already completed setting the locks on the metadata 1.

S806: The service instance 101 sends, to the storage engine instance 201 via the network, the operation command generated based on the database statement.

S807: The storage engine instance 201 executes the operation command to update the data 1 and the metadata 1 in the sub-storage apparatus 3011 to data 2 and metadata 2 respectively.

After updating the data and the metadata, the storage engine instance 201 may feed back, to the service instance 101 via the network, a response indicating that execution of the operation command has been completed.

S808: The service instance 101 sends a transaction to the storage engine instance 201 via the network, where the transaction includes the database statement obtained by the service instance 101.

S809: The storage engine instance 201 commits the transaction.

After successfully committing the transaction, the storage engine instance 201 may feed back, to the service instance 101 via a shared memory 1, a response indicating that the transaction has been successfully committed.

S810: The service instance 101 invalidates the cached data dictionary, where the data dictionary includes the metadata 1, and sends a notification message 2 to the storage engine instance 201 via the network, to notify that the metadata 1 is already invalidated.

S811: The storage engine instance 201 separately sends an invalidation message to the service instance 103 and the service instance 102.

S812: The service instance 103 and the service instance 102 respectively invalidate data dictionaries cached by the service instance 103 and the service instance 102.

After invalidating the data dictionaries, the service instance 103 and the service instance 102 may separately feed back a response to the service instance 101 by using the storage engine instance 201, to notify the service instance 101 that the service instance 103 and the service instance 102 have already completed invalidation of the data dictionaries.

S813: The service instance 101 releases the lock set on the metadata 1, and sends a notification message 3 to the storage engine instance 201 via the network, to notify that the metadata 1 is already unlocked.

S814: The storage engine instance 201 separately sends an unlock message to the service instance 103 and the service instance 102 via the network.

The unlock message may include the metadata 1.

S815: The service instance 103 and the service instance 102 separately release the lock set on the metadata 1.

In this way, in a process of updating the data and the metadata in the sub-storage apparatus 3011, the metadata does not need to be synchronized in the database cluster 100, to avoid resource consumption caused by metadata synchronization. This improves performance of the database cluster 100. In addition, in the data processing system 10, only a copy of updated metadata may be stored in the sub-storage apparatus 3011, and storage resources do not need to be consumed in the database cluster 100 to persistently store the metadata. This reduces persistent storage resources that need to be consumed for storing the metadata. In addition, the database cluster 100 supports a transaction mechanism, so that modification of the data and the metadata in the sub-storage apparatus 3011 by the database cluster 100 can be completed within a single transaction. This can ensure atomic modification of data and metadata.

In an actual application scenario, the service instance 101 may not only update the data and the metadata in the sub-storage apparatus 3011 by using the storage engine instance 201, but also update data and metadata in the sub-storage apparatus 3012 by using the storage engine instance 202.

Specifically, in a running process, the service instance 101 may generate a new database statement, where the new database statement is used to update data 3 and metadata 3 corresponding to the data 3 in the sub-storage apparatus 3012. Then, the service instance 101 may parse the new database statement based on a cached data dictionary (for example, metadata may be reloaded from the persistent storage layer to generate the data dictionary), to generate a new operation command, and send the new operation command to the storage engine instance 202. The storage engine instance 202 updates the data 3 in the sub-storage apparatus 3012 to data 4 based on the received operation command, and updates the metadata 3 in the sub-storage apparatus 3012 to metadata 4, to update the data and the metadata in the sub-storage apparatus 3012.

During actual application, in a process of updating the data 3 and the metadata 3, processes such as setting a lock on the metadata 3, invalidating the data dictionary, committing a transaction, and releasing the lock set on the metadata 3 may be further performed with reference to the method procedure shown in FIG. 8A and FIG. 8B. For details, refer to related descriptions in the embodiment shown in FIG. 8A and FIG. 8B. Details are not described herein again.

Embodiments of this application further provide a computer-readable storage medium. The computer-readable storage medium may be any usable medium that can be stored by a compute device, or a data storage device, such as a data center that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the foregoing data processing method.

Embodiments of this application further provide a computer program product. The computer program product includes one or more computer instructions. When the computer instructions are loaded and executed on a compute device, all or some of the procedures or the functions according to embodiments of this application are generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing data processing method needs to be used, the computer program product may be downloaded and executed on the compute device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Terms used in the foregoing embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" means one, two, or more, and the character "/" generally indicates an "or" relationship between associated objects. In embodiments of this application, "concurrent" means a case in a same time period, including a case at a same moment. In this specification, claims, and accompanying drawings of this application, the terms "first", "second", and the like are intended to distinguish between similar objects but do not necessarily indicate a specific order or sequence. It should be understood that the terms used in such a manner are interchangeable in proper circumstances, and this is merely a distinguishing manner used when objects with a same attribute are described in embodiments of this application.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A database cluster, comprising a plurality of service instances and at least one storage engine instance, wherein the at least one storage engine instance is connected to the plurality of service instances and a storage apparatus, the storage apparatus is configured to persistently store first data and first metadata corresponding to the first data, a first storage engine instance among the at least one storage engine instance is connected to a first service instance and a second service instance among the plurality of service instances, and the first metadata is shared by the first service instance and the second service instance;
the first service instance is configured to: obtain a first database statement, wherein the first database statement indicates to update the first data, and send a first operation command to the first storage engine instance based on the first database statement; and
the first storage engine instance is configured to: update the first data based on the first operation command to obtain second data, and update the first metadata to second metadata corresponding to the second data.

2. The database cluster according to claim 1, wherein the at least one storage engine instance further comprises a second storage engine instance, the plurality of service instances further comprise a third service instance, and the second storage engine instance is connected to the third service instance and the storage apparatus;
the third service instance is configured to: obtain a second database statement, wherein the second database statement indicates to update the second data, and send a second operation command to the second storage engine instance based on the second database statement; and
the second storage engine instance is configured to: update the second data based on the second operation command to obtain third data, and update the second metadata to third metadata corresponding to the third data.

3. The database cluster according to claim 1, wherein the storage apparatus comprises a first sub-storage apparatus and a second sub-storage apparatus, the first sub-storage apparatus is configured to store the first data and the first metadata, and the first sub-storage apparatus and the second sub-storage apparatus are configured to store different data and different metadata;
the at least one storage engine instance further comprises a second storage engine instance, the second storage engine instance is connected to the first service instance, the second service instance, and the second sub-storage apparatus, and the first storage engine instance is connected to the first sub-storage apparatus; and
the first storage engine instance is configured to access the first sub-storage apparatus, and the second storage engine instance is configured to access the second sub-storage apparatus.

4. The database cluster according to claim 1, wherein the storage apparatus comprises a first data storage apparatus, a second data storage apparatus, and a metadata storage apparatus, the first data storage apparatus is configured to store the first data, the first data storage apparatus and the second data storage apparatus are configured to store different data, and the metadata storage apparatus is configured to store metadata corresponding to data in the first data storage apparatus and metadata corresponding to data in the second data storage apparatus;
the at least one storage engine instance further comprises a second storage engine instance, the second storage engine instance is connected to the first service instance, the second service instance, and the second data storage apparatus, the first storage engine instance is connected to the first data storage apparatus, and both the first storage engine instance and the second storage engine instance are connected to the metadata storage apparatus; and
the first storage engine instance is configured to access the first data storage apparatus and the metadata storage apparatus, and the second storage engine instance is configured to access the second data storage apparatus and the metadata storage apparatus.

5. The database cluster according to any one of claims 1 to 4, wherein
the first service instance is further configured to: before sending the first operation command to the first storage engine instance, set a lock on the first metadata, and after the first metadata is updated to the second metadata, release the lock set on the first metadata; and
the first storage engine instance is further configured to: indicate the second service instance to set a lock on the first metadata, and after updating the first metadata to the second metadata, indicate the second service instance to release the lock set on the first metadata.

6. The database cluster according to claim 5, wherein the at least one storage engine instance further comprises the second storage engine instance, the plurality of service instances further comprise the third service instance, and the second storage engine instance is connected to the third service instance and the storage apparatus; and
the first storage engine instance is further configured to: before updating the first metadata to the second metadata, indicate, via the second storage engine instance, the third service instance to set a lock on the first metadata; and after updating the first metadata to the second metadata, indicate, via the second storage engine instance, the third service instance to release the lock set on the first metadata.

7. The database cluster according to claim 6, wherein before the first metadata is updated to the second metadata, the first metadata is cached in the first service instance, the second service instance, and the third service instance;
the first service instance is further configured to: after the first metadata is updated to the second metadata, invalidate the first metadata cached in the first service instance; and
the first storage engine instance is further configured to: indicate the second service instance to invalidate the first metadata cached in the second service instance, and indicate, via the second storage engine instance, the third service instance to invalidate the first metadata cached in the third service instance.

8. The database cluster according to claim 7, wherein
the second service instance is configured to: after invalidating the cached first metadata, cache the second metadata in the storage apparatus.

9. The database cluster according to claim 7 or 8, wherein
the first service instance is further configured to: after the first metadata is updated to the second metadata, send a transaction to the first storage engine instance, wherein the transaction comprises the database statement; and
the first storage engine instance is further configured to commit the transaction.

10. The database cluster according to claim 9, wherein the first storage engine instance fails before committing the transaction; and
the second storage engine instance is configured to: roll back an update operation on the first data and the first metadata, and indicate the third service instance to release the lock set on the first metadata.

11. The database cluster according to claim 9, wherein the first storage engine instance fails after committing the transaction; and
the second storage engine instance is configured to: indicate the third service instance to release the lock set on the first metadata and to invalidate the first metadata cached in the third service instance.

12. A data processing method, applied to a database cluster, wherein the database cluster comprises a plurality of service instances and at least one storage engine instance, the at least one storage engine instance is connected to the plurality of service instances and a storage apparatus, the storage apparatus is configured to persistently store first data and first metadata corresponding to the first data, a first storage engine instance among the at least one storage engine instance is connected to a first service instance and a second service instance among the plurality of service instances, and the first metadata is shared by the first service instance and the second service instance; and the method comprises:
obtaining, by the first service instance, a first database statement, wherein the first database statement indicates to update the first data;
sending, by the first service instance, a first operation command to the first storage engine instance based on the first database statement;
updating, by the first storage engine instance, the first data based on the first operation command, to obtain second data; and
updating, by the first storage engine instance, the first metadata to second metadata corresponding to the second data.

13. The method according to claim 12, wherein the at least one storage engine instance further comprises a second storage engine instance, the plurality of service instances further comprise a third service instance, and the second storage engine instance is connected to the third service instance and the storage apparatus; and the method further comprises:
obtaining, by the third service instance, a second database statement, wherein the second database statement indicates to update the second data;
sending, by the third service instance, a second operation command to the second storage engine instance based on the second database statement;
updating, by the second storage engine instance, the second data based on the second operation command, to obtain third data; and
updating, by the second storage engine instance, the second metadata to third metadata corresponding to the third data.

14. The method according to claim 12, wherein the storage apparatus comprises a first sub-storage apparatus and a second sub-storage apparatus, the first sub-storage apparatus is configured to store the first data and the first metadata, and the first sub-storage apparatus and the second sub-storage apparatus are configured to store different data and different metadata;
the at least one storage engine instance further comprises a second storage engine instance, the second storage engine instance is connected to the first service instance, the second service instance, and the second sub-storage apparatus, and the first storage engine instance is connected to the first sub-storage apparatus; and
the first storage engine instance is configured to access the first sub-storage apparatus, and the second storage engine instance is configured to access the second sub-storage apparatus.

15. The method according to claim 12, wherein the storage apparatus comprises a first data storage apparatus, a second data storage apparatus, and a metadata storage apparatus, the first data storage apparatus is configured to store the first data, the first data storage apparatus and the second data storage apparatus are configured to store different data, and the metadata storage apparatus is configured to store metadata corresponding to data in the first data storage apparatus and metadata corresponding to data in the second data storage apparatus;
the at least one storage engine instance further comprises a second storage engine instance, the second storage engine instance is connected to the first service instance, the second service instance, and the second data storage apparatus, the first storage engine instance is connected to the first data storage apparatus, and both the first storage engine instance and the second storage engine instance are connected to the metadata storage apparatus; and
the first storage engine instance is configured to access the first data storage apparatus and the metadata storage apparatus, and the second storage engine instance is configured to access the second data storage apparatus and the metadata storage apparatus.

16. The method according to any one of claims 12 to 15, wherein the method further comprises:
before sending the first operation command to the first storage engine instance, setting, by the first service instance, a lock on the first metadata;
indicating, by the first storage engine instance, the second service instance to set a lock on the first metadata;
after the first metadata is updated to the second metadata, releasing, by the first service instance, the lock set on the first metadata; and
after updating the first metadata to the second metadata, indicating, by the first storage engine instance, the second service instance to release the lock set on the first metadata.

17. The method according to claim 16, wherein the at least one storage engine instance further comprises the second storage engine instance, the plurality of service instances further comprise the third service instance, and the second storage engine instance is connected to the third service instance and the storage apparatus; and the method further comprises:
before updating the first metadata to the second metadata, indicating, by the first storage engine instance via the second storage engine instance, the third service instance to set a lock on the first metadata; and
after updating the first metadata to the second metadata, indicating, by the first storage engine instance via the second storage engine instance, the third service instance to release the lock set on the first metadata.

18. The method according to claim 17, wherein before the first metadata is updated to the second metadata, the first metadata is cached in the first service instance, the second service instance, and the third service instance; and the method further comprises:
after the first metadata is updated to the second metadata, invalidating, by the first service instance, the first metadata cached in the first service instance; and
indicating, by the first storage engine instance, the second service instance to invalidate the first metadata cached in the second service instance, and indicating, via the second storage engine instance, the third service instance to invalidate the first metadata cached in the third service instance.

19. The method according to claim 18, wherein the method further comprises:
after invalidating the cached first metadata, caching, by the second service instance, the second metadata in the storage apparatus.

20. The method according to claim 18 or 19, wherein the method further comprises:
after the first metadata is updated to the second metadata, sending, by the first service instance, a transaction to the first storage engine instance, wherein the transaction comprises the database statement; and
committing, by the first storage engine instance, the transaction.

21. The method according to claim 20, wherein the first storage engine instance fails before committing the transaction; and
the method further comprises:
rolling back, by the second storage engine instance, an update operation on the first data and the first metadata; and
indicating, by the second storage engine instance, the third service instance to release the lock set on the first metadata.

22. The method according to claim 20, wherein the first storage engine instance fails after committing the transaction; and
the method further comprises:
indicating, by the second storage engine instance, the third service instance to release the lock set on the first metadata; and
invalidating, by the second storage engine instance, the first metadata cached in the third service instance.

23. A data processing system, wherein the data processing system comprises the database cluster according to any one of claims 1 to 11 and the storage apparatus according to any one of claims 1 to 11.

24. A device cluster, wherein the device cluster comprises at least one compute node and at least one storage node, the at least one compute node is configured to implement the database cluster according to any one of claims 1 to 11, and the at least one storage node is configured to implement the storage apparatus according to any one of claims 1 to 11.

25. A computer-readable storage medium, comprising instructions, wherein when the instructions are run on a compute device, the compute device is enabled to perform steps of the method according to any one of claims 12 to 22.

26. A computer program product comprising instructions, wherein when the computer program product is run on at least one compute device, the at least one compute device is enabled to perform steps of the method according to any one of claims 12 to 22.
